# EUROPÄISCHE PATENTSCHRIFT

(11) **EP 2 395 627 B1**
(45) Veröffentlichungstag und Bekanntmachung des Hinweises auf die Patenterteilung: **04.01.2017**
(21) Anmeldenummer: 11159530.2
(22) Anmeldetag: 24.03.2011
(51) Int. Cl.: H02J 13/00, H05K 7/14

(54) **Installationsgerät sowie Einsatzgerät und Aufsatzgerät für ein Installationsgerät**
Installation device and module and mounted device for an installation device
Appareil d'installation ainsi qu'appareil d'insertion et appareil de comptoir pour un appareil d'installation

(30) Priorität: 27.05.2010 DE 102010017102
(43) Veröffentlichungstag der Anmeldung: 14.12.2011
(73) Patentinhaber: Insta Elektro GmbH, 58509 Lüdenscheid (DE)
(72) Erfinder: Stecura, Darius, 45731 Waltrop (DE); Piel, Jörg, 58579 Schalksmühle (DE); Rüther, Carsten, 59425 Unna (DE); Becker-Hennecke, Ralph, 58239 Schwerte (DE); Scharbatke, Kai, 58515 Lüdenscheid (DE)

(56) Entgegenhaltungen:
- EP-A2- 0 993 094
- EP-A2- 1 298 845
- DE-A1-102006 025 300
- DE-B3-102009 010 966
- DE-U1- 20 321 015
- DE-U1- 29 724 594

## Beschreibung

Die vorliegende Erfindung betrifft ein Installationsgerät für ein elektrisches Installationssystem nach dem Oberbegriff von Anspruch 1.

Bei elektrischen Installationssystemen sind elektrische bzw. elektronische Installationsgeräte bekannt, mit denen gegenüber den klassischen Schaltern die Arten der zu steuernden Lasten bzw. Installationen und die Steuerungsmöglichkeiten erheblich erweitert werden können bzw. die Bedienung erleichtert werden kann. Als Lasten kommen neben Glühlampen und anderen Leuchtmitteln bzw. deren Vorschaltgeräten auch Rolladen, Jalousien, Motoren, Ventilatoren usw. in Frage. Die Lasten können beispielsweise durch Phasenan- oder Phasenabschnittsteuerungen, verschiedene analoge oder digitale Ansteuerschnittstellen, über Zeitschalter oder Dimmer oder Relaiskontakte und dergleichen gesteuert werden. Innerhalb eines elektrischen Installationssystems ist jeder Installation, beispielsweise einer Raumbeleuchtung, einer Jalousieinstallation oder dergleichen zumindest ein Installationsgerät zugeordnet, über das diese Installation als Aktor angesteuert werden kann. Ein solches Installationsgerät, das zumindest ein Leistungsteil zum Steuern der Last umfasst, wird im Folgenden als "Hauptstelle" bezeichnet. In derartigen Installationssystemen kann es auch vorgesehen sein, dass von einer Hauptstelle auch unterschiedliche Aktoren angesteuert werden können.

Die Bedienung einer Installation kann direkt über die Hauptstelle erfolgen; hierfür kann die Hauptstelle über ein oder mehrere Bedienelemente verfügen, die beispielsweise als Taster oder berührungssensitive Schalter ausgelegt sein können. Die Hauptstelle kann aber auch alternativ oder zusätzlich den Anschluss einer oder mehrerer Nebenstellen ermöglichen, über die die jeweilige Installation ein- oder ausgeschaltet bzw. bedient werden kann. Haupt- und Nebenstellen sowie die Installationen gleicher oder auch unterschiedlicher Gewerke können im Rahmen eines Hausinstallationssystems, beispielsweise über ein Bussystem, miteinander vernetzt sein. Aus EP 0 993 094 A2 ist ein Installationssystem bekannt, bei dem eine Hauptstelle einen Unterputz-Leistungseinsatz zum Ansteuern einer Installation und ein als darauf aufsteckbarer Aufsatz ausgebildetes Bedienteil umfasst. Hierdurch ist es bei entsprechendem Aufbau der Nebenstellen beispielsweise möglich, eine Untermenge der bei Hauptstellen verwendbaren Aufsätze unverändert als Nebenstellenaufsätze zu nutzen. An eine Hauptstelle sind eine oder mehrere Nebenstellen drahtgebunden angeschlossen, um den an die Hauptstelle angeschlossenen Aktor von unterschiedlichen Stellen innerhalb eines Gebäudes oder auch innerhalb eines Raumes bedienen zu können. Dabei erfolgt eine Ansteuerung der Hauptstelle durch eine Nebenstelle, indem Steuerbefehle über eine die Nebenstelle mit der Hauptstelle verbindende elektrische Leitung übertragen werden. Eine Ansteuerung über eine Funkverbindung ist nicht vorgesehen.

Gemäß EP 1 298 845 A2 umfasst ein Installationsgerät ein Unterputzmodul, das einen Lastaktor oder ein Lastmodul zum Schalten eines externen Lastaktors aufweist, und ein Kompaktmodul, in dem ein Busankoppler und ein Bedienelement zusammengefasst sind. Das Kompaktmodul ist als zweiseitig bestückte Leiterplatte ausgeführt und weist eine erste Schnittstelle zu einem Installationsbus und eine zweite Schnittstelle zu dem Unterputzmodul auf. Aufgrund einer standardisierten Schnittstelle zwischen Unterputzmodul und Kompaktmodul können verschiedene Kompaktmodule und verschiedene Unterputzmodule miteinander gekoppelt werden. Bei einem Wechsel des Kompaktmoduls, der beispielsweise bei einem Defekt oder bei einer Funktionserweiterung notwendig ist, werden alle elektronischen Komponenten des Installationsgeräts ersetzt, so dass eine Funktionserweiterung nahezu einem Austausch des Installationsgeräts gleichkommt, wodurch erhebliche Kosten entstehen.

In DE 203 21 015 U1 ist eine funkgesteuerte elektrische/elektronische Aktoranordnung offenbart, die ein mit einer Antenne bestückbares erstes Gerätemodul aufweist, in welchem zumindest ein Empfängerbaustein zur Abtrennung und Weiterleitung der in einem Funksignal enthaltenen Informationen vorhanden ist, und die zumindest ein weiteres Gerätemodul aufweist, welches zumindest einen Mikrocontroller, ein angeschlossene Verbraucher beeinflussendes Leistungsteil sowie die Bedienelemente beinhaltet. Das erste und jedes weitere Gerätemodul weisen jeweils ein eigenes Netzteil auf und stehen über eine zweidrahtige Busleitung miteinander in Verbindung. Eine Ausbildung als Einsatz- bzw. Aufsatzgerät ist nicht vorgesehen, so dass zur Funktionserweiterung oder zu Behebung eines Defekts ein Austausch eines kompletten Gerätemoduls erforderlich ist.

Aus DE 297 24 594 U1 ist eine Anschlusseinrichtung für ein elektrisches Installationssystem zur Steuerung von Verbrauchern und/oder zur Weiterleitung von Meldesignalen über eine, eine externe Bus-Leitung bildende Datenleitung mit serieller digitaler Datenübertragung bekannt, wobei die Steuer- und/oder Meldeinformationen von und zur externen Bus-Leitung über eine busteilnehmerseitige Bus-Ankopplung geleitet werden. Die Anschlusseinrichtung umfasst ein die Bus-Ankopplung enthaltendes Basismodul und nachgeschaltete funktionsspezifische Erweiterungsmodule mit digitalen und/oder analogen Eingängen und/oder Ausgängen für die jeweiligen Verbraucher, die mit dem Basismodul kommunizierend intern verbunden sind. Das Basismodul enthält einen der Bus-Ankopplung nachgeschalteten Basis-Mikrocontroller, an den eine durch alle Erweiterungsmodule hindurchgeführte interne Bus-Leitung angeschlossen ist, über welche mittels jeweils in den Erweiterungsmodulen angeordneter ErweiterungsMikrocontroller die Verwaltung der Steuer- und/oder Meldeinformationen erfolgt.

In DE 10 2006 025 300 A1 wird ein elektrisches Installationsgerät mit einer Verarbeitungseinheit, einer Energieversorgung und einer Benutzerschnittstelle vorgeschlagen, wobei das Installationsgerät mit einem Steckplatz zur optionalen Aufnahme eines Erweiterungsmoduls versehen ist und das Erweiterungsmodul mit der Verarbeitungseinheit und der Energieversorgung verbunden ist und einen nichtflüchtigen Speicher für die Abspeicherung funktionsbestimmender Daten aufweist. Über die Benutzerschnittstelle können die funktionsbestimmenden Daten bearbeitet werden, wodurch eine Konfiguration des elektrischen Installationsgerätes zur Laufzeit ermöglicht wird.

Gemäß DE 102009010966 B3 wird ein elektrisches/elektronisches Installationsgerät für die Gebäudesystemtechnik mit einer Leiterplatte vorgeschlagen, welches eine erste Schnittstelle zur Ankopplung an das Bussystem eines Gebäudes und eine zweite Schnittstelle für ein Anwendungsmodul aufweist. Einem eine Empfangsstufe, eine Sendestufe und eine Stromversorgungseinheit aufweisenden Transceiver ist eine Demontageerkennungseinrichtung für ein vom Anwendungsmodul kommendes Alarmsignal zugeordnet, welche mit der für das Bussystem vorgesehenen ersten Schnittstelle in Verbindung steht und welche mit einem Alarmtelegrammspeicher ausgerüstet ist.

Es ist die Aufgabe der vorliegenden Erfindung, ein Installationsgerät für ein elektrisches Installationssystem anzugeben, das die o. g. Nachteile nicht aufweist.

Diese Aufgabe wird durch ein Installationsgerät mit den Merkmalen des Anspruchs 1 gelöst.

Ein erfindungsgemäßes Installationsgerät für ein elektrisches Installationssystem umfasst ein Einsatzgerät und ein Aufsatzgerät, wobei Einsatzgerät und Aufsatzgerät elektrisch miteinander verbunden oder verbindbar sind. In bevorzugter Weise sind Einsatzgerät und Aufsatzgerät auch mechanisch miteinander verbunden bzw. verbindbar, insbesondere lösbar miteinander verbunden. Hierfür können an Einsatz- und Aufsatzgerät mechanische Verbindungsmittel wie Rast-, Klemm- oder Schraubelemente vorhanden sein.

Das Einsatzgerät weist ein Netzteil zur Energieversorgung des Einsatzgeräts und des Aufsatzgeräts auf. Das Netzteil ist an ein Versorgungsnetz, beispielsweise an ein 230V-Wechselstromnetz, anschließbar. Das Einsatzgerät umfasst ferner eine erste Schnittstelle zum elektrischen Installationssystem, die insbesondere Kommunikationsmittel zur Kommunikation mit einer oder mehreren Nebenstellen, Hauptstellen und/oder anderen Komponenten des Installationssystems aufweist. Das Einsatzgerät umfasst weiterhin eine zweite Schnittstelle zum elektrischen Anschließen des Aufsatzgeräts, insbesondere für eine bidirektionale Kommunikation mit dem Aufsatzgerät und zur Energieversorgung des Aufsatzgeräts.

Das Aufsatzgerät weist Sensormittel und/oder Kommunikationsmittel zum Erzeugen bzw. zum Aufnehmen eines Steuersignals auf. Derartige Sensormittel können beispielsweise ein oder mehrere Schalter, Taster, berührungssensitive Schalter, Drehknöpfe, ein Touchscreen oder andere Arten von Bedienelementen sein, über die ein Bediener Bedienanweisungen zur Steuerung einer Installation, etwa einer Beleuchtungseinrichtung, einer Jalousie oder auch einer Heiz- oder Klimaanlage in das Installationssystem eingeben kann. Das Betätigen eines Schalters oder Tasters, das Drehen eines Drehknopfes oder die Betätigung anderer Bedienelemente erzeugt ein Steuersignal, das vom Aufsatzgerät weiterverarbeitet bzw. weitergeleitet wird. Alternativ oder zusätzlich kann das Aufsatzgerät eine Vorrichtung zum Betreiben einer Funkverbindung oder einer Fernsteuerung oder auch andere Kommunikationsmittel umfassen, über die ein Steuersignal zur Steuerung einer Installation empfangen werden kann. Je nach der vorgesehenen Bedienung können unterschiedliche Aufsatzgeräte vorgesehen sein, beispielsweise auch Funkmodule. Das Aufsatzgerät weist eine dritte Schnittstelle auf, über die das Aufsatzgerät mit dem Einsatzgerät elektrisch verbunden bzw. verbindbar ist.

Erfindungsgemäß weist das Einsatzgerät Prozessormittel auf, beispielsweise einen oder mehrere Mikroprozessoren oder Mikrokontroller zur Steuerung einer Signalübertragung über die erste und die zweite Schnittstelle. Ferner weist erfindungsgemäß auch das Aufsatzgerät Prozessormittel, beispielsweise einen Mikroprozessor oder Mikrocontroller auf, insbesondere zur Steuerung der Sensormittel und/oder Kommunikationsmittel und/oder einer Signalübertragung über die dritte Schnittstelle. Hierdurch wird eine Funktionserweiterung, etwa zur Verwendung einer Fernbedienung, oder auch eine Behebung eines Defekts durch einen entsprechenden Austausch des Aufsatzgeräts mit den den Funktionen des Aufsatzgeräts zugeordneten Prozessormitteln ermöglicht.

Dadurch, dass sowohl das Einsatzgerät als auch das Aufsatzgerät Prozessormittel aufweisen, können bei einem Austausch des Aufsatzgeräts diejenigen elektronischen Bauelemente, die den Funktionen des Einsatzgeräts zugeordnet sind, im Einsatzgerät verbleiben und weiterhin genutzt werden, so dass ein ggf. notwendiger Austausch elektronischer Bauelemente auf das notwendige Minimum beschränkt bleibt. Hierdurch wird eine kostengünstige Herstellung des Installationsgeräts ermöglicht, da das Aufsatzgerät nur mit denjenigen Bauelementen und derjenigen Prozessorleistung versehen sein muss, die für die aktuell gewünschte Funktionalität benötigt werden. Andererseits ist aber auch eine kostengünstige Funktionserweiterung möglich, da hierfür lediglich das Aufsatzgerät ausgetauscht werden muss.

Gemäß einer bevorzugten Ausführungsform der Erfindung ist das Installationsgerät als Nebenstelle ausgebildet. Hierbei umfasst das Einsatzgerät insbesondere kein Leistungsteil zur Ansteuerung einer Installation und kann daher besonders einfach und kostengünstig ausgeführt sein.

Gemäß einer weiteren bevorzugten Ausführungsform ist das Installationsgerät als Hauptstelle ausgebildet. Hierfür umfasst das Einsatzgerät mindestens ein Leistungsteil zur Ansteuerung mindestens einer Last bzw. eines externen Aktors einer Installation. Das Leistungsteil kann beispielsweise als Relais oder Dimmer zur Ansteuerung einer Beleuchtungseinrichtung ausgebildet sein. Das Leistungsteil kann aber auch zur Ansteuerung anderer Installationen, wie etwa Ventilatoren, Jalousien usw. ausgebildet sein.

Bevorzugt ist eine Ausgestaltung, bei der das Aufsatzgerät mit dem Einsatzgerät über eine 4-polige elektrische Steckverbindung verbindbar ist, insbesondere lösbar verbindbar ist. Eine 4-polige Steckverbindung hat den Vorteil einer einfachen und sicheren Konstruktion; ferner ist eine elektrische Verbindung mit Hilfe einer 4-poligen Steckverbindung beim Aufstecken des Aufsatzgeräts auf das Einsatzgerät einfach und sicher herzustellen. Die vier Pole reichen aus, um sowohl die Versorgung des Aufsatzgeräts mit elektrischer Energie als auch eine bidirektionale Datenübertragung zwischen Einsatz- und Aufsatzgerät zu ermöglichen. Hierfür können jeweils zwei Pole vorgesehen sein, wodurch eine Entkopplung der Spannungsversorgung und der Signalübertragung erreicht werden kann. Beispielsweise kann ein erster Steckkontakt die Versorgungsspannung übertragen, ein zweiter den Bezugspegel, ein dritter ein erstes Signal und ein vierter ein zweites Signal.

Ferner ist das Netzteil des Einsatzgeräts für den Betrieb eines Funkmoduls ausgelegt. Ein Funkmodul hat im Allgemeinen einen höheren Leistungsbedarf als die anderen im Einsatz- oder im Aufsatzgerät vorgesehenen elektronischen Elemente, wie beispielsweise Mikroprozessoren oder Sensoren. Das Funkmodul ist dem Aufsatzgerät zugeordnet. Dadurch, dass das Netzteil des Einsatzgeräts auch dann, wenn das Installationsgerät noch kein Funkmodul umfasst, bereits für den Betrieb eines Funkmoduls ausgelegt ist und die hierfür benötigte elektrische Leistung zur Verfügung stellen kann, ist eine besonders einfache Funktionserweiterung durch nachträglichen Einbau eines Funkmoduls möglich, ohne das Netzteil des Einsatzgeräts oder das gesamte Einsatzgerät austauschen zu müssen. Wesentlich höhere Herstellkosten für das Einsatzgerät entstehen durch die höhere Leistungsfähigkeit des Netzteils in der Regel nicht.

Die vorliegende Erfindung betrifft auch ein Einsatzgerät für ein erfindungsgemäßes Installationsgerät. In bevorzugter Weise ist dieses als Unterputz-Einbaugerät ausgebildet. Hierdurch wird eine besonders einfache Verwendung im Rahmen eines Hausinstallationssystems gewährleistet.

Ein derartiges Einsatzgerät umfasst ein Netzteil, eine erste Schnittstelle zum Installationssystem, eine zweite Schnittstelle zum Aufsatzgerät sowie Prozessormittel. Ist das Installationsgerät als Hauptstelle ausgebildet, so umfasst das Einsatzgerät weiterhin mindestens ein Leistungsteil zur Ansteuerung einer Installation bzw. eines Aktors. Diese Bauteile können innerhalb eines für die Unterputz-Installation geeigneten Gehäuses angeordnet sein. Dabei können Maßnahmen zum Abführen der in den Bauteilen beim Betrieb entstehenden Wärme getroffen werden, beispielsweise kann ein wärmeleitender Rahmen oder eine metallische Abdeckplatte vorgesehen sein. Zum Anschluss des Netzteils an ein Versorgungsnetz sowie zum Anschluss über die erste Schnittstelle an eine Steuerleitung des Installationssystems kann das Einsatzgerät Anschlüsse bzw. Klemmen aufweisen, die beispielsweise an der Außenseite des Gehäuses angeordnet oder durch Durchbrüche im Gehäuse zugänglich sein können. Das gleiche gilt für die Schnittstelle zum Aufsatzgerät.

In einer Ausführungsform des Einsatzgeräts kann dieses auch für das Aufsetzen eines einfachen Schaltaufsatzes ausgelegt sein, der über keinen Mikrokontroller verfügt. In diesem Fall kann das Einsatzgerät zur direkten Auswertung des Schaltsignals des Aufsatzes ausgebildet sein.

Ferner betrifft die vorliegende Erfindung ein Aufsatzgerät für ein erfindungsgemäßes Installationsgerät.

Erfindungsgemäß umfasst das Aufsatzgerät mindestens eine weitere Schnittstelle zum Applizieren eines Plug-Ins, das ein Funkmodul ist, für dessen Anschluss über die weitere Schnittstelle das Aufsatzgerät ausgelegt ist. Hierdurch ist auf besonders einfache Weise eine Funktionserweiterung zum Anschluss an ein Funknetz möglich, wodurch beispielsweise eine bidirektionale Kommunikation innerhalb des Funknetzes oder eine Bedienung über eine Funkverbindung möglich ist. Hierdurch kann eine Funktionserweiterung, insbesondere eine Vernetzung, ohne zusätzlichen Verdrahtungsaufwand erfolgen. Andererseits ist ein Aufsatzgerät, das über keinen Anschluss an ein Funknetz verfügt, nicht mit den Kosten eines Funkmoduls belastet.

Die für das Betreiben einer Funkverbindung notwendige Funkantenne kann prinzipiell im Einsatzgerät vorgesehen sein, im Aufsatzgerät oder im als Plug-In eingesetzten Funkmodul. Insbesondere dann, wenn das Einsatzgerät als Unterputz-Einbaugerät ausgebildet ist, hat eine im Einsatzgerät angeordnete Funkantenne jedoch eine relativ geringe Reichweite. Dies ist dadurch bedingt, dass die Funkantenne beim Unterputz-Einbau innerhalb einer Gebäudewand angeordnet ist und durch diese sowie durch umgebende Bauteile des Installationsgeräts, beispielsweise durch das Aufsatzgerät, durch ein Gehäuse und/oder durch eine Abdeckplatte, abgeschirmt wird. Ist die Funkantenne im als Plug-In eingesetzten Funkmodul angeordnet, so ist die Leistungsfähigkeit der Antenne in der Regel durch die begrenzten Platzverhältnisse innerhalb des Plug-Ins eingeschränkt. Insbesondere ist in diesem Fall keine optimale Antennenform möglich, sondern nur beispielsweise eine Ausführung als Chip-Antenne, was entweder einen relativ geringen Wirkungsgrad oder relativ hohe Kosten verursacht.

Erfindungsgemäß ist daher die Funkantenne dem Aufsatzgerät zugeordnet. Insbesondere kann die Funkantenne an oder auf der Oberseite des Aufsatzgeräts angeordnet sein. Hierdurch ist eine Ausführung beispielsweise als Whip-Antenne, Loop-Antenne oder auch als IFA-Antenne möglich. Insbesondere eine Whip-Antenne, die auch gefaltet sein kann, stellt eine besonders kostengünstige Antennenform mit relativ hohem Wirkungsgrad dar. Dadurch, dass die Antenne im oder am Aufsatzgerät angeordnet ist, wird die Reichweite der Funkverbindung nicht durch darüberliegende, insbesondere nicht durch metallische Bauteile abgeschirmt. Ferner bestehen in diesem Fall nicht die engen Raumbeschränkungen wie innerhalb eines Plug-Ins. Dadurch, dass die Funkantenne auch dann bereits im Aufsatzgerät vorhanden ist, wenn keine Funkverbindung vorgesehen ist, entstehen keine wesentlich höheren Kosten; andererseits kann durch Einsatz eines Funkmoduls als Plug-In auf einfache Weise eine Funkverbindung realisiert werden.

Alternativ oder zusätzlich kann der Anschluss von Plug-Ins auch im oder am Einsatzgerät vorgesehen sein.

Erfindungsgemäß ist das Aufsatzgerät über die dritte Schnittstelle automatisch konfigurierbar. So können insbesondere dann, wenn ein Aufsatzgerät zum Verbinden mit unterschiedlich ausgebildeten Einsatzgeräten vorgesehen ist, über die Schnittstelle vom Einsatzgerät an das Aufsatzgerät Informationen weitergegeben werden, aufgrund derer die Funktionsweise des Aufsatzgeräts dem jeweiligen Einsatzgerät, insbesondere dem jeweiligen Leistungsteil des Einsatzgeräts, angepasst wird. Aufgrund dieser Informationen kann der im Aufsatz vorgesehene Mikroprozessor oder Mikrokontroller die von einem Bedienelement oder auch über eine Funkverbindung erhaltenen Steuersignale in einer dem jeweiligen Einsatzgerät angepassten Weise auswerten und über die Schnittstelle an das Einsatzgerät übermitteln. Dient beispielsweise das Einsatzgerät dem Ansteuern einer nicht-dimmbaren Beleuchtungsinstallation, so kann ein am Aufsatzgerät angeordnetes Bedienelement, beispielsweise ein Drucktaster, als einfacher Schalter zum An- oder Ausschalten der Beleuchtung verwendet werden. Umfasst das Einsatzgerät andererseits einen Dimmer zum Ansteuern einer dimmbaren Beleuchtungsinstallation, so kann der Drucktaster über eine zeitkodierte Eingabe zum Dimmen der Beleuchtung dienen. In ähnlicher Weise können durch entsprechende Konfiguration der Prozessormittel des Aufsatzgeräts die Sensormittel und/oder Kommunikationsmittel des Aufsatzgeräts dem jeweiligen Einsatzgerät automatisch angepasst werden. Hierdurch ist eine besonders vielseitige Verwendung eines Aufsatzgeräts möglich.

Zur Inbetriebnahme eines Installationsgeräts ist es somit lediglich notwendig, ein Aufsatzgerät auf ein für den Betrieb der vorgesehenen Installation geeignetes Einsatzgerät aufzustecken. Hierbei erfolgt durch die automatische Konfiguration eine automatische Anpassung der Funktionsweise des Aufsatzgeräts an das entsprechende Einsatzgerät bzw. die entsprechende Installation. Zur Implementierung einer Funktionserweiterung, etwa einer Sensorsteuerung oder einer Funkvernetzung, ist es in ähnlicher Weise lediglich notwendig, ein vorhandenes Aufsatzgerät abzunehmen und ein für die Funktionserweiterung geeignetes Aufsatzgerät aufzusetzen. Hierdurch wird eine besonders einfache Inbetriebnahme bzw. Funktionserweiterung ermöglicht.

Über die dritte Schnittstelle können auch beispielsweise Software-Updates an die Prozessormittel des Aufsatzgeräts übermittelt werden, um einen kontinuierlichen, störungsfreien Betrieb und eine einfache Fehlerbeseitigung oder Funktionserweiterung zu gewährleisten; ebenso kann auch die Software für den Betrieb eines Plug-Ins über die dritte Schnittstelle an den Mikrokontroller des Aufsatzgerät überspielt werden. Software bzw. Software-Updates können auch über eine Funkverbindung überspielbar sein.

Das Aufsatzgerät kann ferner Anzeigeelemente aufweisen, die eine Statusanzeige ermöglichen. Insbesondere kann hierdurch der Status einer Hauptstelle angezeigt werden, beispielsweise ob eine Beleuchtungseinrichtung ein- oder ausgeschaltet ist oder eine Jalousie geöffnet oder geschlossen ist. Dies spielt insbesondere dann eine Rolle, wenn die Bedienung nicht in dem Raum erfolgt, in dem die betreffende Installation angeordnet ist. Als Anzeigeelemente kommen beispielsweise LEDs oder LCD-Displays in Frage, wobei derartige Displays auch den Dimm- oder Öffnungsgrad in analoger oder digitaler Form anzeigen können. Die Anzeigeelemente werden insbesondere durch die Prozessormittel des Aufsatzgeräts aufgrund von Daten, die vom Einsatzgerät an das Aufsatzgerät übermittelt werden, gesteuert. Anzeigeelemente können an Hauptstellen, bei bidirektionaler Kommunikation auch an Nebenstellen vorgesehen sein. Erfolgt keine bidirektionale Kommunikation, so kann es vorgesehen sein, dass ein an einem Aufsatzgerät vorhandenes Anzeigeelement bei Verwendung in einer Nebenstelle nicht angesteuert wird.

Das Aufsatzgerät kann ferner Sensoren aufweisen und von den Sensoren gelieferte Daten aufnehmen, die zur Steuerung der Installation verwendet und hierzu an das Einsatzgerät weitergeleitet werden. So können beispielsweise Helligkeits- oder Temperatursensoren vorgesehen sein, die für eine automatische Heizungs- bzw. Beleuchtungssteuerung verwendet werden. Die Sensordaten können auch über Kommunikationsmittel, beispielsweise eine Funkverbindung oder eine Infrarot-Fernsteuerung übermittelt werden. Das Aufsatzgerät kann auch Zeitschalter oder Automatikschalter, beispielsweise Bewegungsmelder, aufweisen.

Erfindungsgemäß ist daher ein Installationssystem dadurch modular ausgestaltet, dass Haupt- und Nebenstellen jeweils aus einem Einsatzgerät und einem Aufsatzgerät aufgebaut sind, wobei unterschiedliche Kombinationen von Einsatz- und Aufsatzgeräten möglich sind. Insbesondere können für die verschiedenen Gewerke des Installationssystems bzw. die betreffenden unterschiedlichen Aktoren jeweils spezifische Einsatzgeräte für die Hauptstellen vorgesehen sein, sowie einheitliche oder auch ggf. unterschiedliche Einsatzgeräte für die Nebenstellen. Ferner können die Aufsatzgeräte für Haupt- und Nebenstellen für das jeweilige Gewerk einheitlich ausgebildet sein. Je nach Art der Bedienung können die Aufsatzgeräte für unterschiedliche Gewerke ebenfalls einheitlich oder auch unterschiedlich ausgebildet sein. Hierdurch kann mit einer begrenzten Anzahl unterschiedlicher Einsatz- und Aufsatzgeräte jede im Rahmen des Installationssystems notwendige Haupt- oder Nebenstelle zusammengesetzt werden. Dies kann auch im Wege einer Um- oder Nachrüstung geschehen, wobei die jeweiligen Einsatzgeräte verbleiben können.

Die Einsatz- und Aufsatzgeräte, insbesondere die Mikrokontroller im Einsatz- und im Aufsatzgerät, sind dabei bevorzugt bereits für den Betrieb in den jeweils notwendigen Kombinationen von Einsatz- und Aufsatzgeräten ausgelegt. Dies gilt auch für Funktionserweiterungen, wie etwa eine Funkvernetzung, die durch Einsatz eines Funkmoduls in das Aufsatzgerät hergestellt werden kann. Die für eine Funktionserweiterung notwendigen Komponenten sind bevorzugt bereits im Einsatzgerät enthalten, jedenfalls soweit hierdurch keine wesentlich höheren Kosten entstehen. So kann beispielsweise die Stromversorgung eines Einsatzgeräts für alle mit diesem Einsatzgerät kombinierbaren Aufsatzgeräte ausgelegt sein. Andererseits sind die nur für eine Funktionserweiterung notwendigen Komponenten vom Aufsatzgerät umfasst, insbesondere die kostenträchtigen Komponenten. So ist beispielsweise ein leistungsfähigerer Mikrokontroller, der für den Anschluss an ein Funknetzwerk notwendig ist, im Aufsatzgerät vorgesehen, während ein weniger leistungsfähiger Mikrokontroller, der für den Betrieb der ersten und zweiten Schnittstelle und die Ansteuerung des Leistungsteils ausreicht, in dem als Grundmodul dienenden Einsatzgerät enthalten ist. In einer Grundausstattung des Installationssystems sind daher zukünftige Ausbauschritte bereits angelegt, ohne dass kostenträchtige Komponenten, wie etwa das Funkmodul, bereits vorhanden sein müssten. Eine Ausnahme von dieser Regel bildet die Funkantenne, die aus Gründen des Raumbedarfs und der Reichweite bevorzugt im Aufsatzgerät eingebaut ist, aber erst bei Einsatz eines Funkmoduls nutzbar wird. Durch die vorliegende Erfindung wird ein kostengünstiges, modulares und ausbaufähiges Installationssystem geschaffen.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Eine schematisierte Darstellung eines nicht-vernetzten elektrischen Installationssystems umfassend eine Hauptstelle und mehrere drahtgebunden daran angeschlossene Nebenstellen;
- **Fig. 2:**: Eine schematisierte Schnittdarstellung eines als UnterputzEinsatz ausgebildeten Einsatzgeräts und eines Aufsatzgeräts;
- **Fig. 3:**: Eine schematisierte Schnittdarstellung eines Aufsatzgeräts mit einem an das Aufsatzgerät als Plug-In ansetzbaren Funkmodul;
- **Fig. 4:**: Ein Blockschaltbild der Hardwarestruktur eines Einsatzgeräts;
- **Fig. 5:**: Ein Blockschaltbild der Hardwarestruktur eines Aufsatzgeräts.

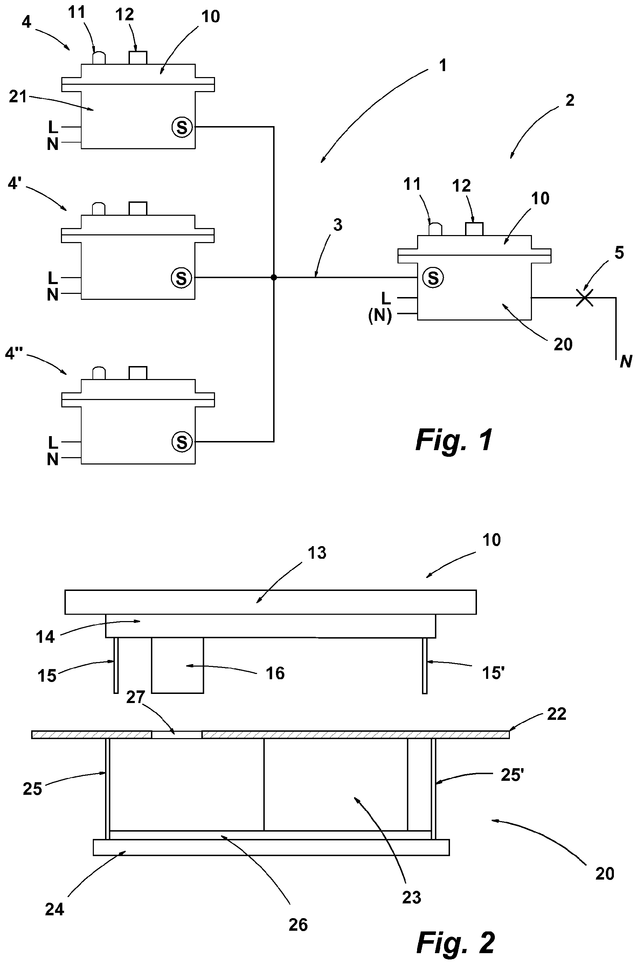

In dem dargestellten Ausführungsbeispiel umfasst ein elektrisches Installationssystem 1 gemäß Fig. 1 eine Hauptstelle 2, die über eine Nebenstellenleitung 3, die einen oder mehrere Drähte umfassen kann, mit mehreren Nebenstellen 4, 4', 4" verbunden ist. Die Hauptstelle verfügt über ein Leistungsteil, beispielsweise ein Relais, mit dem ein Aktor 5 des im Übrigen nicht näher dargestellten Installationsystems angesteuert werden kann. Bei dem Aktor 5 kann es sich um jedweden Aktor einer elektrischen Installation handeln, beispielsweise eines Beleuchtungssystems, einer Klimaanlage, einer Beschattungseinrichtung oder dergleichen. Die Nebenstellen 4, 4', 4" sind an unterschiedlichen Orten innerhalb eines Gebäudes oder Raumes angeordnet und dienen zum Ansteuern der Hauptstelle 2 und damit des an die Hauptstelle 2 angeschlossenen Aktors 5.

Die Hauptstelle 2 umfasst ein Aufsatzgerät 10 und ein Einsatzgerät 20, wobei das Einsatzgerät 20 für den Unterputz-Einbau vorgesehen ist. Das Leistungsteil zur Ansteuerung des Aktors 5 ist im Einsatzgerät 20 angeordnet. Das Einsatzgerät 20 weist einen Anschluss an ein Versorgungsnetz mit Phase L und Nullleiter N auf; hierfür können am Einsatzgerät 20 entsprechende Anschlussklemmen vorhanden sein. Ferner weist das Einsatzgerät 20 eine erste Schnittstelle zum Anschluss der Nebenstellenleitung 3 auf; diese Schnittstelle ist in Fig. 1 mit S gekennzeichnet. Die erste Schnittstelle kann ebenfalls eine oder mehrere Klemmen aufweisen.

Eine Nebenstelle 4 umfasst ein Aufsatzgerät 10 und ein Einsatzgerät 21, wobei das Einsatzgerät 21 ebenfalls für den Unterputz-Einbau vorgesehen ist. Das Einsatzgerät 21 enthält kein Leistungsteil. Im Übrigen kann das Einsatzgerät 21 ähnlich dem Einsatzgerät 20 aufgebaut sein, mit einem Anschluss an ein Versorgungsnetz L, N sowie einer ersten Schnittstelle zum Anschluss der Nebenstellenleitung 3 auf, die in Fig. 1 ebenfalls mit S gekennzeichnet ist. Die weiteren Nebenstellen 4', 4" können wie die Nebenstelle 4 aufgebaut sein.

Über die Nebenstellenleitung 3 werden Signale zur Steuerung des Leistungsteils des Einsatzgeräts 20 und damit des Aktors 5 übertragen. Diese werden von dem jeweiligen Einsatzgerät 20 bzw. 21 zugeordneten Mikrokontrollern erzeugt bzw. empfangen und ausgewertet. Im vorliegend beschriebenen Ausführungsbeispiel erfolgt eine bidirektionale Kommunikation über die Nebenstellenleitung 3, die die Bedienung der Hauptstelle 2 durch die Nebenstellen 4, 4', 4" und eine Statusrückmeldung von der Hauptstelle 2 an die Nebenstellen 4, 4', 4" ermöglicht; es kann aber auch eine lediglich unidirektionale Kommunikation von den Nebenstellen 4, 4', 4" an die Hauptstelle 2 zur Bedienung der Hauptstelle und damit des Aktors 5 vorgesehen sein.

Das Aufsatzgerät 10 umfasst jeweils ein Anzeigeelement, insbesondere eine LED 11, sowie ein Bedienelement, beispielsweise einen Taster 12. Über den Taster 12 kann ein Benutzer Bedienkommandos eingeben, beispielsweise um durch einmaliges kurzes Betätigen des Tasters 12 den Aktor 5 ein- bzw. auszuschalten. Die LED 11 dient zur Statusanzeige, um für den Benutzer erkennbar anzuzeigen, ob sich der Aktor 5 in ein- oder ausgeschaltetem Zustand befindet. Bei dem dargestellten Ausführungsbeispiel ist der Aktor 5 sowohl von der Hauptstelle als auch von den Nebenstellen 4, 4', 4" betätigbar. Es kann aber auch eine Betätigung nur von einer Teilmenge der Nebenstellen aus vorgesehen sein.

Soll beispielsweise eine Betätigung einer Beleuchtungseinrichtung über die Nebenstelle 4 erfolgen, so wird der Taster 12 der Nebenstelle 4 betätigt, um die Beleuchtungseinrichtung zum Einschalten oder zum Dimmen anzusteuern. Das vom Taster 12 erzeugte Signal wird von einem dem Aufsatzgerät 10 der Nebenstelle 4 zugeordneten Mikroprozessor oder Mikrokontroller aufgenommen, ausgewertet und in vorverarbeiteter, insbesondere in digitalisierter Form über eine Schnittstelle an einen im Einsatzgerät 21 der Nebenstelle 4 angeordneten Mikroprozessor oder Mikrokontroller übermittelt. Von letzterem wird ein entsprechender Steuerbefehl über die Nebenstellenleitung 3 an das Einsatzgerät 20 der Hauptstelle 2 übertragen, wo der Befehl von einem dem Einsatzgerät 20 der Hauptstelle 2 zugeordneten Mikrokontroller dekodiert und zur Ansteuerung des Leistungsteils verwendet wird. Die Übertragung der Signale über die Nebenstellenleitung 3 kann analog, digital, über ein Busprotokoll oder in anderer geeigneter Weise erfolgen. Entsprechend der ausgeführten Aktion wird ein Statussignal vom Mikrokontroller des Einsatzgeräts 20 der Hauptstelle 2 erzeugt und über die Nebenstellenleitung 3 an die Nebenstelle 4 übertragen. Das Signal wird vom Mikrokontroller des Einsatzgeräts 21 an den Mikrokontroller des Aufsatzgeräts 10 der Nebenstelle 4 weitergeleitet; von diesem wird die LED 11 zur Anzeige des Status der Installation angesteuert. Ist beispielsweise die Beleuchtungseinrichtung "an", so leuchtet die LED 11. Ist die Beleuchtungseinrichtung "aus", so leuchtet die LED 11 nicht. Die LED 11 könnte auch den Dimmgrad der Beleuchtungseinrichtung anzeigen.

Wie in Figur 2 gezeigt, umfasst ein Aufsatzgerät 10 eine Abdeckplatte 13, unterhalb derer eine Leiterplatte 14 angeordnet ist. Die Leiterplatte trägt elektronische Bauelemente, insbesondere einen Mikrokontroller, der zum Betreiben der Schnittstelle zum Einsatzgerät, zum Aufnehmen und Auswerten von Steuersignalen von Bedienelementen und zum Ansteuern von Anzeigeelementen notwendig ist (in Fig. 2 nicht dargestellt); hierfür kann der Mikrokontroller insbesondere auch einen Timer umfassen. Ferner kann der Mikrokontroller zum Ansteuern eines Funkmoduls dienen (s. u.).

Mit der Leiterplatte 14 sind vier Steckkontakte 15, 15' verbunden, die beispielsweise in zwei Gruppen mit je zwei Kontaktstiften angeordnet sein können. Ferner sind am Aufsatzgerät 10 bzw. an der Leiterplatte 14 mechanische Verbindungsmittel vorgesehen, beispielsweise ein Vorsprung 16, der auch Rastelemente aufweisen kann.

Wie in Figur 2 weiter gezeigt, umfasst das Einsatzgerät 20 einen Gehäuseboden 24, der mit Verbindungsstreben 25, 25' an einer Trägerplatte 22 befestigt ist. Die Trägerplatte 22 dient zur Befestigung des Einsatzgeräts in der Wand bzw. in einer Unterputzdose und weist die hierfür notwendige mechanische Stabilität auf. Die Trägerplatte 22 besteht aus Stahl oder, zur besseren Wärmeabführung, aus Aluminium. Auf dem Gehäuseboden 24 ist eine Leiterplatte 26 angeordnet, die die Leistungselektronik 23 sowie ein Netzteil zur Versorgung der elektronischen Bauteile des Einsatz- und des Aufsatzgeräts und einen Mikrokontroller trägt (nicht dargestellt). Die Trägerplatte 22 weist eine Aussparung 27 auf, in die der Vorsprung 16 des Aufsatzgeräts 10 eingesetzt werden kann. Die Aussparung 27 und der Vorsprung 16 können derart gestaltet sein, dass alle oder nur bestimmte Kombinationen von Einsatz- und Aufsatzgeräten möglich sind. Die Steckkontakte 15, 15' können durch weitere Aussparungen der Trägerplatte 22 in entsprechende Buchsen eingesetzt werden (nicht dargestellt). Kontakte bzw. Klemmen zur Verbindung mit der Nebenstellenleitung und dem Versorgungsnetz sind nicht dargestellt.

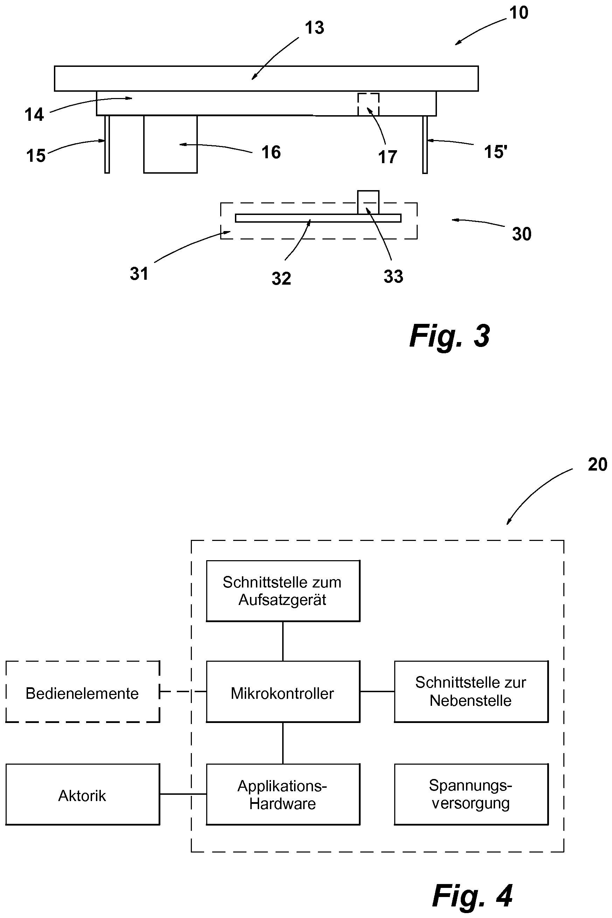

Gemäß Figur 3 kann an eine Leiterplatte 14 des Aufsatzgeräts 10 ein Plug-In, insbesondere ein Funkmodul 30 angesetzt werden. Hierfür ist im Aufsatzgerät 10 unterhalb der Leiterplatte 14 ein entsprechender Steckplatz mit einer Buchse 17 vorgesehen. Das Funkmodul 30 umfasst eine Leiterplatte 32, die einen mehrpoligen Steckkontakt 33 zur Verbindung mit der Leiterplatte 14 des Aufsatzgeräts 10 aufweist. Ferner kann das Funkmodul 30 ein Gehäuse 31 aufweisen. Die für das Herstellen einer Funkverbindung notwendige Funkantenne ist auf der Leiterplatte 14 des Aufsatzgeräts 10 angeordnet, wird jedoch erst durch das Einstecken des Funkmoduls 30 in Betrieb genommen.

Wie in Figur 4 schematisch dargestellt ist, umfasst das Einsatzgerät 20 einen Mikrokontroller, der einerseits die Schnittstelle zum Aufsatzgerät, andererseits die Schnittstelle zur Nebenstellenleitung bedient. Ferner steuert der Mikrokontroller die Leistungselektronik des Einsatzgeräts, insbesondere die anwendungsspezifische Applikationshardware, beispielsweise Relais, Dimmer oder andere Steuerungsmittel für externe Aktoren. Ferner kann der Mikrokontroller dafür ausgelegt sein, Steuersignale von Bedienelementen direkt zu empfangen und zu verarbeiten. Das Einsatzgerät 20 umfasst außerdem ein Netzteil zur Versorgung der elektronischen Bauteile des Einsatzgeräts, insbesondere des Mikrokontrollers.

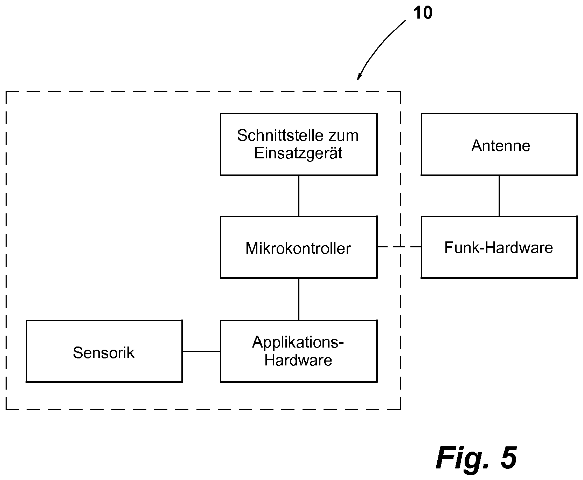

Gemäß Figur 5 umfasst ein Aufsatzgerät 10 einen Mikrokontroller, der die Schnittstelle zum Einsatzgerät bedient und die Applikationshardware, insbesondere die Hardware der dem Aufsatzgerät zugeordneten Sensorik, steuert. Die Energieversorgung des Mikrokontrollers, der Applikationshardware und ggf. der Sensormittel erfolgt über die Schnittstelle zum Einsatzgerät durch das Netzteil des Einsatzgeräts. Optional kann ein Funkmodul vorgesehen sein, das eine eigene Hardware umfasst und das ebenfalls durch den Mikrokontroller angesteuert wird. Die Funkantenne kann dem Funkmodul zugeordnet sein und wird mit diesem an das Aufsatzgerät angesetzt. Erfindungsgemäß ist die Funkantenne jedoch im Aufsatzgerät 10 enthaltenund wird erst dann angesteuert, wenn ein Funkmodul vorhanden ist.

## Patentansprüche

1. Installationsgerät für ein elektrisches Installationssystem (1) mit einem Einsatzgerät (20) und einem Aufsatzgerät (10), wobei das Einsatzgerät (20) ein Netzteil zur Energieversorgung des Einsatzgeräts (20) und des Aufsatzgeräts (10), eine erste Schnittstelle (S) zum Installationssystem (1) und eine zweite Schnittstelle zum Aufsatzgerät (10) umfasst, und wobei das Aufsatzgerät (10), Sensormittel und/oder Kommunikationsmittel zum Erzeugen bzw. Aufnehmen eines Steuersignals sowie eine dritte Schnittstelle aufweist und mit dem Einsatzgerät (20) über die dritte Schnittstelle elektrisch verbunden ist, **dadurch gekennzeichnet, dass** das Einsatzgerät (20) und das Aufsatzgerät (10) Prozessormittel umfassen, dass das Aufsatzgerät (10) über die dritte Schnittstelle automatisch konfigurierbar ist und dass das Aufsatzgerät (10) über eine vierte Schnittstelle zum Anschließen eines Plug-Ins verfügt, das dem Installationsgerät zugeordnet ist und das ein Funkmodul (30) ist, wobei die Antenne des Funkmoduls (30) dem Aufsatzgerät (10) zugeordnet ist.

2. Installationsgerät nach Anspruch 1, **dadurch gekennzeichnet, dass** das Installationsgerät als Nebenstelle (4) ausgebildet ist.

3. Installationsgerät nach Anspruch 1, **dadurch gekennzeichnet, dass** das Installationsgerät als Hauptstelle (2) ausgebildet ist und hierfür das Einsatzgerät (20) weiterhin mindestens ein Leistungsteil zur Ansteuerung mindestens einer Last umfasst.

4. Installationsgerät nach einem der vorhergehenden Ansprüche, **dadurch gekennzeichnet, dass** das Aufsatzgerät (10) mit dem Einsatzgerät (20) über eine 4-polige elektrische Steckverbindung verbindbar ist.

5. Installationsgerät nach einem der vorhergehenden Ansprüche, **dadurch gekennzeichnet, dass** das Netzteil des Einsatzgeräts (20) Energielieferant ebenfalls für das Funkmodul (30) ist.

6. Einsatzgerät für ein Installationsgerät eines elektrischen Installationssystems, **dadurch gekennzeichnet, dass** das Einsatzgerät als Einsatzgerät (20) für ein Installationsgerät gemäß einem der vorhergehenden Ansprüche ausgebildet ist.

7. Aufsatzgerät für ein Installationsgerät eines elektrischen Installationssystems, **dadurch gekennzeichnet, dass** das Aufsatzgerät als Aufsatzgerät (10) für ein Installationsgerät gemäß einem der Ansprüche 1 bis 5 ausgebildet ist.

8. Elektrisches Installationssystem, umfassend eine Mehrzahl von Hauptstellen (2) und eine Mehrzahl von Nebenstellen (4), **dadurch gekennzeichnet, dass** die Hauptstellen (2) und die Nebenstellen (4) jeweils aus einem Einsatzgerät, das als Einsatzgerät (20) für ein Installationsgerät gemäß einem Ansprüche 1 bis 5 ausgebildet ist, und einem Aufsatzgerät, das als Aufsatzgerät (10) für ein Installationsgerät gemäß einem der Ansprüche 1 bis 5 ausgebildet ist, aufgebaut sind, wobei die Einsatzgeräte (20) und die Aufsatzgeräte (10) für den Betrieb in unterschiedlichen Kombinationen von Einsatzgeräten (20) und Aufsatzgeräten (10) ausgelegt sind.

## Claims

1. Installation device for an electronic installation system (1) with an insertion device (20) and a top piece (10), wherein the insertion device (20) comprises a power supply unit for energy supply of the insertion device (20) and the top piece (10), a first interface (S) to the installation device (1) and a second interface to the top piece (10), and wherein the top piece (10) provides sensor means and/or communication means for generating respectively receiving a control signal as well as a third interface and is electrically connected to the insertion device (20) via the third interface, **characterized by the fact** that the insertion device (20) and the top piece (10) comprise processor means, to the effect that the top piece (20) is automatically configured via the third interface and that the top piece (10) provides a fourth interface for connection of a Plugin which is assigned to the installation device and which is a radio module (30), wherein the antenna of the radio module (30) is assigned to the top piece (10).

2. Installation device in accordance with Claim 1, **characterized by the fact** that the installation device is designed as extension (4).

3. Installation device in accordance with Claim 1, **characterized by the fact** that the installation device is designed as main station (2) and to this effect the insertion device (20) furthermore comprises at least one power element for control of at least one load.

4. Installation device in accordance with any of the aforementioned Claims, **characterized by the fact** that the top piece (10) can be connected to the insertion device (20) via a 4-pin electric plug connection.

5. Installation device in accordance with any of the aforementioned Claims, **characterized by the fact** that the power supply unit of the insertion device (20) also supplies energy for the radio module (30).

6. Insertion device for an installation device of an electric installation system, **characterized by the fact** that the insertion device is designed as insertion device (20) for an installation device in accordance with any of the aforementioned claims.

7. Top piece for an installation device of an electric installation system, **characterized by the fact** that the top piece is designed as top piece (10) for an installation device in accordance with any of claims 1 to 5.

8. Electric installation system, comprising several main stations (2) and several extensions (4), **characterized by the fact** that the main stations (2) and the extensions (4) each consist of an insertion device which is designed as insertion device (20) for an installation device in accordance with any of claims 1 to 5 and consist of a top piece which is designed as top piece (10) for an installation device in accordance with any of claims 1 to 5, wherein the insertion devices (20) and the top pieces (10) are designed for operation in different combinations of insertion devices (20) and top pieces (10).

## Revendications

1. Appareil d'installation destiné à un système d'installation électrique (1), comportant un appareil encastré (20) et un appareil en saillie (10), l'appareil encastré (20) comprenant un bloc d'alimentation pour l'alimentation électrique de l'appareil encastré (20) et de l'appareil en saillie (10), une première interface (S) vers le système d'installation (1) et une deuxième interface vers l'appareil en saillie (10), et l'appareil en saillie (10) présentant des moyens de détection et/ou de communication permettant de générer ou de capter un signal de commande, ainsi qu'une troisième interface, et étant relié électriquement à l'appareil encastré (20) par la troisième interface, **caractérisé en ce que** l'appareil encastré (20) et l'appareil en saillie (10) comprennent des éléments de processeur, **en ce que** l'appareil en saillie (10) peut être configuré automatiquement par l'intermédiaire de la troisième interface, et **en ce que** l'appareil en saillie (10) dispose d'une quatrième interface permettant de raccorder un plug-in, attribué à l'appareil d'installation, et étant un module radio (30), l'antenne du module radio (30) étant attribuée à l'appareil en saillie (10).

2. Appareil d'installation selon la revendication 1, **caractérisé en ce que** l'appareil d'installation est réalisé sous forme de poste secondaire (4).

3. Appareil d'installation selon la revendication 1, **caractérisé en ce que** l'appareil d'installation est réalisé sous forme de poste principal (2) et que l'appareil encastré (20) comprend pour cela au moins un élément de puissance pour la commande d'au moins une charge.

4. Appareil d'installation selon l'une des revendications précédentes, **caractérisé en ce que** l'appareil en saillie (10) peut être relié à l'appareil encastré (20) par une prise électrique 4 pôles.

5. Appareil d'installation selon l'une des revendications précédentes, **caractérisé en ce que** le bloc d'alimentation de l'appareil encastré (20) fournit également l'énergie électrique pour le module radio (30).

6. Appareil encastré pour un appareil d'installation d'un système d'installation électrique, **caractérisé en ce que** l'appareil encastré est réalisé en tant qu'appareil encastré (20) pour un appareil d'installation conformément à l'une des revendications précédentes.

7. Appareil en saillie pour un appareil d'installation d'un système d'installation électrique, **caractérisé en ce que** l'appareil en saillie est réalisé en tant qu'appareil en saillie (10) pour un appareil d'installation conformément à l'une des revendications 1 à 5.

8. Système d'installation électrique, comprenant plusieurs postes principaux (2) et plusieurs postes secondaires (4), **caractérisé en ce que** les postes principaux (2) et les postes secondaires (4) sont constitués respectivement par un appareil encastré, réalisé en tant qu'appareil encastré (20) pour un appareil d'installation conformément à l'une des revendications 1 à 5, et un appareil en saillie réalisé en tant qu'appareil en saillie (10) pour un appareil d'installation conformément à l'une des revendications 1 à 5, les appareils encastrés (20) et les appareils en saillie (10) étant conçus pour une utilisation avec des combinaisons d'appareils encastrés (20) et d'appareils en saillie (10) diverses.
